# EUROPEAN PATENT SPECIFICATION

(11) **EP 3 654 268 B1**
(45) Date of publication and mention of the grant of the patent: **29.11.2023**
(21) Application number: 19220028.5
(22) Date of filing: 13.07.2016
(51) Int. Cl.: G06Q 30/0601, G06Q 20/30, G06Q 20/32

(54) **CARD REGISTRATION METHOD FOR PAYMENT SERVICE AND MOBILE ELECTRONIC DEVICE IMPLEMENTING THE SAME**
KARTENREGISTRIERUNGSVERFAHREN FÜR BEZAHLDIENST UND MOBILE ELEKTRONISCHE VORRICHTUNG ZUR IMPLEMENTIERUNG DAVON
PROCÉDÉ D'ENREGISTREMENT DE CARTES POUR SERVICES DE PAIEMENT ET DISPOSITIF ÉLECTRONIQUE MOBILE METTANT EN OEUVRE CELUI-CI

(30) Priority: 14.07.2015 KR 20150100126
(43) Date of publication of application: 20.05.2020
(62) Divisional of application: 16179338.5
(73) Proprietor: Samsung Electronics Co., Ltd., Gyeonggi-do 16677 (KR)
(72) Inventor: CHOI, Jonghwa, 16677 Suwon-si (KR); Cho, Boohyun, 16677 Suwon-si (KR)
(74) Representative: Nederlandsch Octrooibureau

(56) References cited:
- US-A1- 2014 249 948
- US-A1- 2015 128 079
- US-A1- 2015 169 425
- Misty E. Vermaat: "Discovering Computers: Essentials (Shelly Cashman) 1st Edition", 4 March 2013 (2013-03-04), Course Technology, XP055302032, ISBN: 978-1-285-16178-5 * page 4 - pages 10, 29 * * page 65 - page 66 * * page 117 - page 118 * * page 132 - page 133 *
- Wikipedia: "Mobile Web", INTERNET ARTICLE, 2 July 2015 (2015-07-02), XP055302120, Retrieved from the Internet: URL:https://en.wikipedia.org/w/index.php?t itle=Mobile_Web&oldid=669559697 [retrieved on 2016-09-13]
- Joseph Annuzzi ET AL: "Advanced Android Application Development, 4th Edition" In: "Advanced Android Application Development, 4th Edition", 24 November 2014 (2014-11-24), Addison-Wesley, XP055288159, ISBN: 978-0-13-389238-3 page Ch08, * page 115 - page 118 *
- Cnet: "Samsung Pay: Easy as a swipe and tap", YouTube Video, 3 March 2015 (2015-03-03), XP055293501, Retrieved from the Internet: URL:https://www.youtube.com/watch?v=03jSxI YhUu4 [retrieved on 2016-08-04]
- Dom Esposito: "How to set up Apple Pay for iPhone 6 & 6 Plus! (iOS 8.1)", YouTube Video, 20 October 2014 (2014-10-20), XP055302366, Retrieved from the Internet: URL:https://www.youtube.com/watch?v=8kNLTF AdS4A [retrieved on 2016-09-14]
- Pocketnow: "The New Money: Using Apple Pay in the Real World", YouTube Video, 21 October 2014 (2014-10-21), XP055458447, Retrieved from the Internet: URL:https://www.youtube.com/watch?v=FiQTkX g0owY [retrieved on 2018-03-12]
- Wikipedia: "Samsung Galaxy S6", INTERNET ARTICLE, 13 July 2015 (2015-07-13), XP055458388, Retrieved from the Internet: URL:https://en.wikipedia.org/w/index.php?t itle=Samsung_Galaxy_S6&oldid=671231859 [retrieved on 2018-03-12]
- Maximiliano Firtman: "Programming the Mobile Web 1st Edition" In: "Programming the Mobile Web 1st Edition", 2 August 2010 (2010-08-02), O'Reilly, XP055245526, ISBN: 978-0-596-80778-8 pages ToC, Pre, Ch01-Ch03, Ch10,
- Langer Josef ET AL: "Anwendungen und Technik von Near Field Communication (NFC)" In: "Anwendungen und Technik von Near Field Communication (NFC)", 16 September 2010 (2010-09-16), Springer, Heidelberg, XP055088161, ISBN: 978-3-64-205496-9 DOI: 10.1007/978-3-642-05497-6,
- Richard Ferraro ET AL: "Location-Aware Applications" In: "Location-Aware Applications", 28 July 2011 (2011-07-28), Manning Publications, XP055223427, ISBN: 978-1-935182-33-7 pages 0-298,
- Wikipedia: "Authentication", INTERNET ARTICLE, 14 July 2015 (2015-07-14), XP055458395, Retrieved from the Internet: URL:https://en.wikipedia.org/w/index.php?t itle=Authentication&oldid=671347811 [retrieved on 2018-03-12]
- Kovach Steve: "This Tiny Metal Coil Has The Power To Change Mobile Payments And Become Bigger Than Apple Pay", INTERNET ARTICLE, 6 January 2015 (2015-01-06), XP055906299, Retrieved from the Internet: URL:https://www.businessinsider.com/looppa y-tiny-metal-coil-revolutionize-mobile-pay ments-2015-1 [retrieved on 2022-03-29]

## Description

### TECHNICAL FIELD

This application is a divisional application from the parent application 16179338.5 with publication number 3118803. The whole content of the parent application as filed is included in this divisional application.

The present disclosure relates to a card registration method for a payment service and a mobile electronic device implementing the same.

### BACKGROUND

Recently, good purchases using credit-based cards have been popularized in addition to those using money. Accordingly, many users use credit cards to pay for purchased goods. On the other hand, with the development of the internet, an environment in which goods are sold has been changed from an object environment to a cyber environment. To cope with this, a payment method in accordance with a good purchase in a cyber environment has also been changed in various manners.

For example, a payment method in accordance with good purchase and payment for the purchased goods in a cyber environment in the related art is implemented in a manner that a user provides credit card information preregistered in a terminal (e.g., smart phone) to a service device that requests payment for the good purchase, and a financial agency provides a corresponding amount of money that is required by the service device. Accordingly, if a user purchases a good using a credit card, a financial agency that has guaranteed credit for the corresponding credit card pays a corresponding amount of money to a good seller, and thereafter, the user provides the corresponding amount of money to the financial agency. In this process, the user may directly input credit card related information or may use the credit card related information pre-stored in the terminal when purchasing the good.

The above information is presented as background information only to assist with an understanding of the present disclosure. No determination has been made, and no assertion is made, as to whether any of the above might be applicable as prior art with regard to the present disclosure.

### SUMMARY

The invention is according to the independent claims. This document may comprise embodiments that are not claimed, which are for the purpose of a better understanding of the invention.

The existing payment service is configured to receive an input of card information after pre-selecting a card company that has issued a corresponding card. In this case, a user may input information about the card company. Accordingly, the user should select the card company of the card to be registered, and since it is not possible for the user to change the card being used to a card of another card company during inputting of the information, the user should return to an initial stage. Further, since policy has been applied for each card company during selection of the card company, it may be difficult to change or enforce the policy in real time in accordance with a request from the card company or the necessity on the payment service.

Aspects of the present disclosure are to address at least the above-mentioned problems and/or disadvantages and to provide at least the advantages described below. Accordingly, an aspect of the present disclosure is to provide a method to solve the above problems and an electronic device implementing the method. For example, an aspect of the present disclosure provides a method and a device which can register a card without selecting a card company.

Another aspect of the present disclosure is to provide a method and a device which can safely register a card by dynamically changing the policy in accordance with the location of a user terminal.

In accordance with an aspect of the present disclosure, an electronic device is provided. The electronic device includes an image acquisition device, a user interface, a memory configured to store a payment application program, a communication circuit configured to perform wireless communication, and a processor electrically connected to the image acquisition device, the user interface, the memory, and the communication circuit, wherein the memory, when executed, stores instructions to cause the processor to receive at least a part of information on a transaction card or an account, which is used to perform payment using the payment application program, through the image acquisition device or the user interface, to transmit at least the part of the information to an outside through the communication circuit, to receive an indication, which is selected on the basis of at least the part of the information from the outside, through the communication circuit, to request selected input items through the user interface on the basis of at least a part of the indication, to receive information that corresponds to the selected input items through the user interface, and to transmit the information to the outside through the communication circuit.

In accordance with another aspect of the present disclosure, a server device is provided. The server device includes a communication circuit configured to communicate with an external device, a memory, and a processor electrically connected to the communication circuit and the memory, wherein the memory stores instructions to cause the processor, when executed, to receive at least a part of information on a transaction card or an account, which is used to perform payment using a payment application program that is included in the external device, through the communication circuit, to select an indication related to the transaction card or the account on the basis of at least the part of the information, to transmit the indication to the external device through the communication circuit, and to receive information that is acquired from the external device through the communication circuit on the basis of at least a part of the indication.

In accordance with another aspect of the present disclosure, a method for operating an electronic device is provided. The method includes receiving at least a part of information on a transaction card or an account, which is used to perform payment using a payment application program, through an image acquisition device or a user interface, transmitting at least a part of the information to an outside, receiving an indication, which is selected on the basis of at least the part of the information, from the outside, requesting selected input items through the user interface on the basis of at least a part of the indication, receiving information that corresponds to the selected input items through the user interface, and transmitting the information to the outside.

In accordance with another aspect of the present disclosure, a method for operating a server device is provided. The method includes receiving at least a part of information on a transaction card or an account, which is used to perform payment using a payment application program that is included in an external device, selecting an indication related to the transaction card or the account on the basis of at least the part of the information, transmitting the indication to the external device, and receiving information that is acquired from the external device on the basis of at least a part of the indication.

The aspects of the present disclosure provide a method and a device which can register a card without selecting a card company. Further, the aspects of the present disclosure provide a method and a device which can safely register a card by dynamically changing an indication (in other words, policy) in accordance with the location of a user terminal.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating the configuration of an electronic device according to an embodiment of the present disclosure;
FIG. 2 is a block diagram of an electronic device according to an embodiment of the present disclosure;
FIG. 3 is a block diagram illustrating a hardware structure of an electronic device that can perform a payment function according to an embodiment of the present disclosure;
FIG. 4 is a diagram illustrating a payment system according to an embodiment of the present disclosure;
FIG. 5 is a flowchart explaining a card registration method according to an embodiment of the present disclosure;
FIGS. 6A, 6B, 6C, 6D, and 6E are diagrams illustrating user interfaces for card registration according to an embodiment of the present disclosure;
FIGS. 7A, 7B, and 7C are diagrams illustrating user interfaces for card registration according to an embodiment of the present disclosure; and
FIG. 8 is a block diagram of a program module according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, operation, constituent element, component or a combination thereof, but may not be construed to exclude the existence of or a possibility of the addition of one or more other characteristics, numbers, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device may indicate different user devices although both of them are user devices. For example, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure is a device including a communication function. For example, the electronic device may be one or a combination of a smart phone, a tablet personal computer (PC), a mobile phone, a video phone, an e-book reader, a desktop PC, a laptop PC, a netbook computer, a personal digital assistant (PDA), a camera, and a wearable device (e.g., a head-mounted-device (HMD) such as electronic glasses; electronic clothes; an electronic bracelet; an electronic necklace; an electronic accessary; an electronic tattoo; and a smart watch).

According to some embodiments, the electronic device may be a smart home appliance having a communication function. The smart home appliance may include at least one of a television (TV), a digital versatile disc (DVD) player, an audio player, an air conditioner, a cleaner, an oven, a microwave oven, a washing machine, an air cleaner, a set-top box, a TV box (e.g., Samsung HomeSync^{™}, Apple TV^{™}, or Google TV^{™}), game consoles, an electronic dictionary, an electronic key, a camcorder, and an electronic frame.

According to some embodiments, the electronic device may include at least one of various types of medical devices (e.g., magnetic resonance angiography (MRA), magnetic resonance imaging (MRI), computed tomography (CT), a scanner, an ultrasonic device and the like), a navigation device, a global navigation satellite system (GNSS) receiver, an event data recorder (EDR), a flight data recorder (FDR), a vehicle infotainment device, electronic equipment for a ship (e.g., a navigation device for ship, a gyro compass and the like), avionics, a security device, a head unit for a vehicle, an industrial or home robot, an automatic teller machine (ATM) of financial institutions, a point of sale (POS) device of shops, and a device for internet of things (IoT) (e.g., a fire alarm, various sensors, electric or gas meter units, a sprinkler, a thermostat, a streetlamp, a toaster, sport outfits, a hot-water tank, a heater, a boiler and the like).

According to some embodiments, the electronic device may include at least one of furniture or a part of a building/structure, an electronic board, an electronic signature receiving device, a projector, and various types of measuring devices (e.g., a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (e.g., an artificial intelligence electronic device) which uses an electronic device.

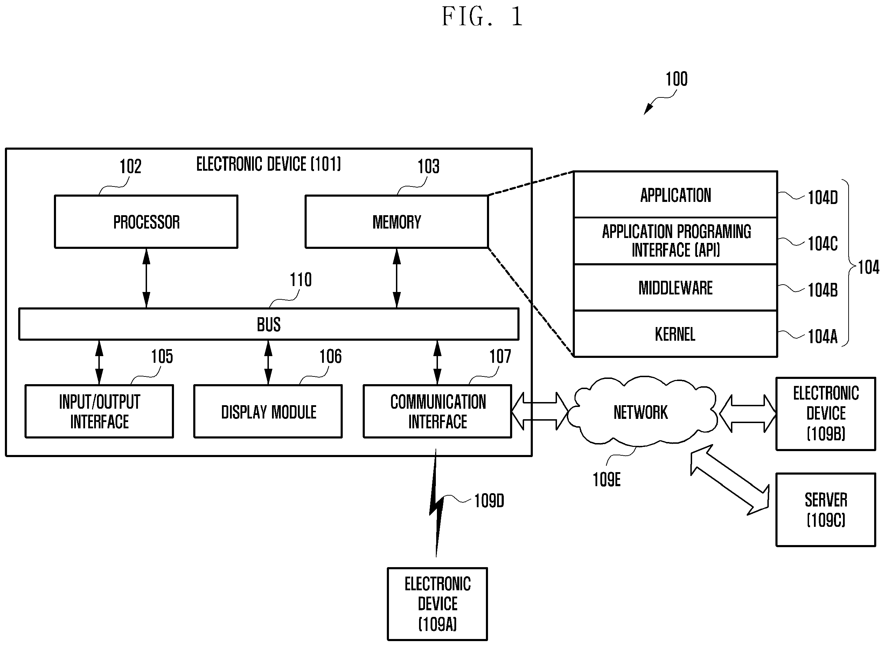

FIG. 1 illustrates a network environment 100 including an electronic device 101 according to an embodiment of the present disclosure.

Referring to FIG. 1, the electronic device 101 may include various components including a bus 110, a processor 102, a memory 103, an input/output interface 105, a display 106, a communication interface 107, and a power management module (not shown in FIG. 1).

The bus 110 may be a circuit connecting the above described components and transmitting communication (e.g., a control message) between the above described components.

The processor 102 may receive commands from other components (e.g., the memory 103, the input/output interface 105, the display 106, the communication interface 107, or the power management module) through the bus 110, analyze the received commands, and execute calculation or data processing according to the analyzed commands.

The memory 103 stores commands or data received from the processor 102 or other components (e.g., the input/output interface 105, the display 106, the communication interface 107, or the power management module) or generated by the processor 102 or other components. The memory 103 may store a software and/or a program. For example, the program 104 may include a kernel 104A, middleware 104B, an application programming interface (API) 104C, and an application program (or an application) 104D. At least part of the kernel 104A, the middleware 104B or the API 104C may refer to an operating system (OS).

The kernel 104A controls or manages system resources (e.g., the bus 110, the processor 102, or the memory 103) used for executing an operation or function implemented by the remaining other programming modules, for example, the middleware 104B, the API 104C, or the application 104D. Further, the kernel 104A provides an interface for accessing individual components of the electronic device 101 from the middleware 104B, the API 104C, or the application 104D to control or manage the components.

The middleware 104B performs a relay function of allowing the API 104C or the application 104D to communicate with the kernel 104A to exchange data. Further, in operation requests received from the application 104D, the middleware 104B performs a control for the operation requests (e.g., scheduling or load balancing) by using a method of assigning a priority, by which system resources (e.g., the bus 110, the processor 102, the memory 103 and the like) of the electronic device 101 can be used, to the application 104D.

The API 104C is an interface by which the application 104D can control a function provided by the kernel 104A or the middleware 104B and includes, for example, at least one interface or function (e.g., command) for a file control, a window control, image processing, or a character control.

According to various embodiments, the application 104D may include a short message service (SMS)/multimedia messaging service (MMS) application, an email application, a calendar application, an alarm application, a health care application (e.g., application measuring quantity of exercise or blood sugar) or an environment information application (e.g., application providing information on barometric pressure, humidity or temperature). Additionally, or alternatively, the application 104D may be an application related to an information exchange between the electronic device 101 and an external electronic device (e.g., electronic device 109B). The application 104D related to the information exchange may include, for example, a notification relay application for transferring particular information to the external electronic device or a device management application for managing the external electronic device.

For example, the notification relay application may include a function of transmitting notification information generated by another application (e.g., an SMS/MMS application, an email application, a health care application or an environment information application) of the electronic device 101 to the external electronic device (e.g., electronic device 109B). Additionally, or alternatively, the notification relay application may receive notification information from, for example, the external electronic device 109B, and provide the received notification information to the user. The device management application may manage (e.g., install, remove, or update) at least a part of functions of the electronic device. For example, the device management application may turn on/off the external electronic device (or some components of the external electronic device), control a brightness of the display of the external electronic device or communicate with the electronic device 101, an application executed in the external electronic device 109B, or a service (e.g., call service or message service) provided by the external electronic device 109B.

According to various embodiments, the application 104D may include an application designated according to an attribute (e.g., type of electronic device) of the external electronic device 109B. For example, when the external electronic device 109B is a Moving Picture Experts Group phase 1 or phase 2 (MPEG-1 or MPEG-2) audio layer 3 (MP3) player, the application 104D may include an application related to music reproduction. Similarly, when the external electronic device 109B is a mobile medical device, the application 104D may include an application related to health care. According to an embodiment, the application 104D may include at least one of an application designated to the electronic device 101 and an application received from an external electronic device (e.g., server 109C or electronic device 109B).

The input/output interface 105 transmits a command or data input from the user through an input/output device 105 (e.g., a sensor, a keyboard, or a touch screen) to the processor 102, the memory 103, the communication interface 107, or the display control module 106 through, for example, the bus 110. For example, the input/output interface 105 may provide data on a user's touch input through a touch screen to the processor 102. Further, the input/output interface 105 may output a command or data received through, for example, the bus 110, from the processor 102, the memory 103, the communication interface 107, or the power management module through the input/output device (e.g., a speaker or a display). For example, the input/output interface 105 may output voice data processed through the processor 102 to the user through the speaker.

The display 106 may include, for example, liquid crystal display (LCD), flexible display, transparent display, light-emitting diode (LED) display, organic LED (OLED) display, microelectromechanical systems (MEMS) display, or electronic paper display. The display 106 may visually offer, for example, various contents (e.g., text, image, video, icon, symbol, etc.) to users. The display 106 may include a touch screen and receive, for example, a touch, gesture, proximity, or hovering input using an electronic pen or a user's body. According to an embodiment, the display 106 may be one or more displays. For example, the display 106 may be included in the electronic device 101 or included in an external device (e.g., the electronic device 109A or 109B) having a wired or wireless connection with the electronic device 101, thus outputting information offered by the electronic device 101 to users.

According to an embodiment, the display 106 may be attachable to or detachable from the electronic device 101. For example, the display 106 may include an interface which can be mechanically or physically connected with the electronic device 101. According to an embodiment, in case the display 106 is detached (e.g., separated) from the electronic device 101 by a user's selection, the display 106 may receive various control signals or image data from the power management module or the processor 102, e.g., through wireless communication.

The communication interface 107 may establish communication between the electronic device 101 and any external device (e.g., the first external electronic device 109A, the second external electronic device 109B, or the server 109C). For example, the communication interface 107 may be connected with a network 109E through wired or wireless communication and thereby communicate with any external device (e.g., the first external electronic device 109A, the second external electronic device 109B, or the server 109C).

According to an embodiment, the electronic device 101 may be connected with the first external electronic device 109A and the second external electronic device 109B without using the communication interface 107. For example, based on at least one of a magnetic sensor, a contact sensor, a light sensor, and the like that is equipped in the electronic device 101, the electronic device 101 may sense whether at least one of the first and second external electronic devices 109A and 109B is contacted with at least part of the electronic device 101, or whether at least one of the first and second external electronic device 109A and 109B, respectively, is attached to at least part of the electronic device 101.

Wireless communication may use, as cellular communication protocol, at least one of long-term evolution (LTE), LTE advanced (LTE-A), code division multiple access (CDMA), wideband CDMA (WCDMA), universal mobile telecommunications system (UMTS), wireless broadband (WiBro), global system for mobile communications (GSM), and the like, for example. A short-range communication 109D may include, for example, at least one of Wi-Fi, Bluetooth, near field communication (NFC), magnetic secure transmission or near field magnetic data stripe transmission (MST), GNSS, and the like. The GNSS may include at least one of, for example, a global positioning system (GPS), a global navigation satellite system (GLONASS), a BeiDou Navigation Satellite System (hereinafter, referred to as "BeiDou"), and Galileo (European global satellite-based navigation system). Hereinafter, the "GPS" may be interchangeably used with the "GNSS" in the present disclosure. Wired communication may include, for example, at least one of universal serial bus (USB), high definition multimedia interface (HDMI), recommended standard-232 (RS-232), plain old telephone service (POTS), and the like. The network 109E may include telecommunication network, for example, at least one of a computer network (e.g., local area network (LAN) or wide area network (WAN)), internet, and a telephone network.

The first and second external electronic devices 109A and 109B may be identical to, or different from, the electronic device 101. According to an embodiment, the first and second external electronic devices 109A and 109B may include, for example, a plurality of electronic devices. According to an embodiment, the server 109C may include a single server or a group of servers. According to various embodiments, all or part of operations executed in the electronic device 101 may be executed in other electronic device(s), such as the first and second electronic devices 109A and 109B or the server 109C.

According to an embodiment, in case the electronic device 101 is required to perform a certain function or service automatically or by request, the electronic device 101 may request another device (e.g., the electronic device 109A or 109B or the server 109C) to execute instead, or additionally at least part, of at least one or more functions associated with the required function or service. The requested device may execute the requested function and deliver the result of execution to the electronic device 101. Then, the electronic device 101 may offer the required function or service, based on the received result or by processing the received result. For the above, cloud computing technology, distributed computing technology, or client-server computing technology may be used, for example.

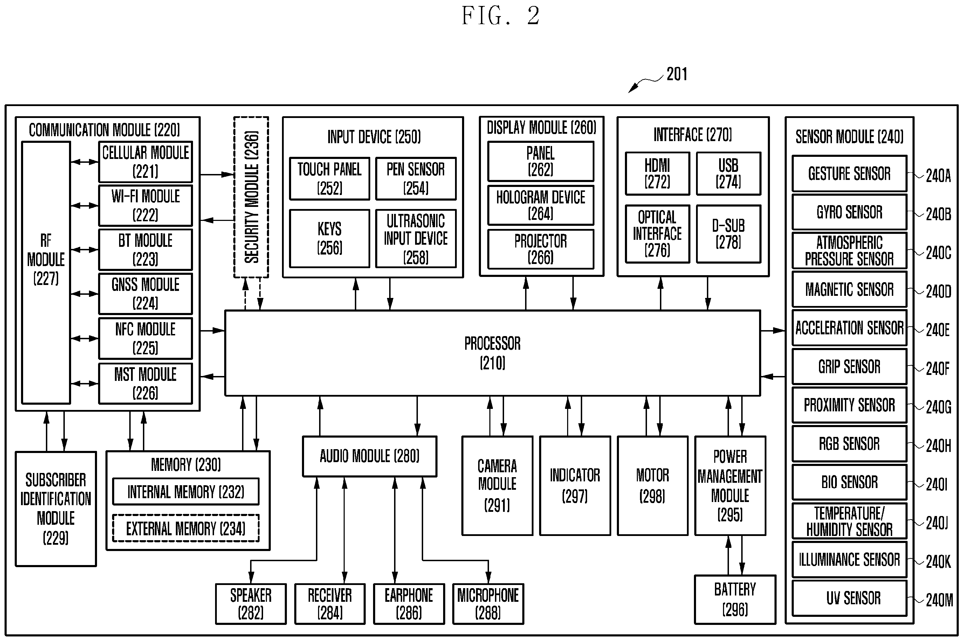

FIG. 2 is a detailed block diagram showing a configuration of an electronic device 201 according to an embodiment of the present disclosure. For example, the electronic device 201 is capable of including part or all of the components in the electronic device 101 shown in FIG. 1.

Referring to FIG. 2, the electronic device 201 is capable of including one or more processors 210 (e.g., application processors (APs)), a communication module 220, a subscriber identification module (SIM) 229, a memory 230, a security module 236, a sensor module 240, an input device 250, a display 260, an interface 270, an audio module 280, a camera module 291, a power management module 295, a battery 296, an indicator 297, and a motor 298.

The processor 210 is capable of driving, for example, an OS or an application program to control a plurality of hardware or software components connected to the processor 210, processing various data, and performing operations. The processor 210 may be implemented as, for example, a system on chip (SoC). According to an embodiment, the processor 210 may further include a graphics processing unit (GPU) and/or an image signal processor. The processor 210 may also include at least part of the components shown in FIG. 2, e.g., a cellular module 221. The processor 210 is capable of loading commands or data received from at least one of other components (e.g., a non-volatile memory) on a volatile memory, processing the loaded commands or data. The processor 210 is capable of storing various data in a non-volatile memory.

The communication module 220 may include the same or similar configurations as the communication interface 107 shown in FIG. 1. For example, the communication module 220 is capable of including a cellular module 221, Wi-Fi module 222, Bluetooth module 223, GNSS module 224 (e.g., a GPS module, GLONASS module, BeiDou module or Galileo module), NFC module 225, MST module 226, and radio frequency (RF) module 227.

The cellular module 221 is capable of providing a voice call, a video call, an SMS service, an internet service, etc., through a communication network, for example. According to an embodiment, the cellular module 221 is capable of identifying and authenticating an electronic device 201 in a communication network by using a SIM 229 (e.g., a SIM card). According to an embodiment, the cellular module 221 is capable of performing at least part of the functions provided by the processor 210. According to an embodiment, the cellular module 221 is also capable of including a communication processor (CP).

Each of the Wi-Fi module 222, the Bluetooth module 223, the GNSS module 224, and the NFC module 225 is capable of including a processor for processing data transmitted or received through the corresponding module. The MST module 226 is capable of including a processor for processing data transmitted or received through the corresponding module. According to various embodiments, at least part of the cellular module 221, Wi-Fi module 222, Bluetooth module 223, GNSS module 224, NFC module 225, and MST module 226 (e.g., two or more modules) may be included in one integrated chip (IC) or one IC package.

The RF module 227 is capable of transmission/reception of communication signals, e.g., RF signals. The RF module 227 is capable of including a transceiver, a power amp module (PAM), a frequency filter, a low noise amplifier (LNA), an antenna, etc. According to an embodiment, at least one of the following modules: cellular module 221, Wi-Fi module 222, Bluetooth module 223, GNSS module 224, NFC module 225, and MST module 226 is capable of transmission/reception of RF signals through a separate RF module.

The SIM module 229 is capable of including a card including a SIM and/or an embodied SIM. The SIM module 229 is also capable of containing unique identification information, e.g., integrated circuit card identifier (ICCID), or subscriber information, e.g., international mobile subscriber identity (IMSI).

The memory 230 (e.g., memory 103 shown in FIG. 1) is capable of including a built-in memory 232 or an external memory 234. The built-in memory 232 is capable of including at least one of the following: a volatile memory, e.g., a dynamic random access memory (DRAM), a static RAM (SRAM), a synchronous DRAM (SDRAM), etc.; and a non-volatile memory, e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., an NAND flash memory, an NOR flash memory, etc.), a hard drive, a solid state drive (SSD), etc.

The external memory 234 is also capable of including a flash drive, e.g., a compact flash (CF), a secure digital (SD), a micro-SD, a mini-SD, an extreme digital (xD), a multi-media card (MMC), a memory stick, etc. The external memory 234 is capable of being connected to the electronic device 201, functionally and/or physically, through various interfaces.

The memory 230 is capable of storing payment information and a payment application serving as one of the application programs 104D. The payment information may refer to credit card numbers and personal identification numbers (PINs), corresponding to a credit card. The payment information may also include user authentication information, e.g., fingerprints, facial features, voice information, etc.

When the payment application is executed by the processor 210, it enables the processor 210 to perform: an interaction with the user to make payment (e.g., displaying a screen to select a card (or a card image) and obtaining information (e.g., a card number) corresponding to a selected card (e.g., a pre-specified card) from payment information); and an operation to control magnetic field communication (e.g., transmitting the card information to an external device (e.g., a card reading apparatus) through the NFC module 225 or MST module 226).

The security module 236 may include a storage of which a security level is higher than a security level of the memory 230 and circuits for supporting that data is safely stored in the storage and used by other components such as the processor 210. The security module 236 may further include a processor separate from the processor 210. The security module 236 may be embedded in, for example, a detachable smart chip or an SD. The security module may include an embedded secure element (eSE) embedded in some chip of the electronic device 201. The security module 236 may be operated by an OS such as java card open platform (JCOP) different from the OS shown in FIG. 1.

The sensor module 240 is capable of measuring/detecting a physical quantity or an operation state of the electronic device 201, and converting the measured or detected information into an electronic signal. The sensor module 240 is capable of including at least one of the following: a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green and blue (RGB) sensor), a biometric sensor 240I, a temperature/humidity sensor 240J, an illuminance sensor 240K, and an ultraviolet (UV) sensor 240M. Additionally or alternatively, the sensor module 240 is capable of further including an E-nose sensor, an electromyography (EMG) sensor, an electroencephalogram (EEG) sensor, an electrocardiogram (ECG) sensor, an infrared (IR) sensor, an iris sensor and/or a fingerprint sensor. The sensor module 240 is capable of further including a control circuit for controlling one or more sensors included therein. In embodiments, the electronic device 201 is capable of including a processor, configured as part of the processor 210 or a separate component, for controlling the sensor module 240. In this case, while the processor 210 is operating in sleep mode, the processor is capable of controlling the sensor module 240.

The input device 250 is capable of including a touch panel 252, a (digital) pen sensor 254, a key 256, or an ultrasonic input unit 258. The touch panel 252 may be implemented with at least one of the following: a capacitive touch system, a resistive touch system, an IR touch system, and an ultrasonic touch system. The touch panel 252 may further include a control circuit. The touch panel 252 may also further include a tactile layer to provide a tactile response to the user.

The (digital) pen sensor 254 may be implemented with a part of the touch panel or with a separate recognition sheet. The key 256 may include a physical button, an optical key, or a keypad. The ultrasonic input unit 258 is capable of detecting ultrasonic waves, created in an input tool, through a microphone 288, and identifying data corresponding to the detected ultrasonic waves.

The display 260 (e.g., the display 106 shown in FIG. 1) is capable of including a panel 262, a hologram unit 264, or a projector 266. The panel 262 may include the same or similar configurations as the display 106 shown in FIG. 1. The panel 262 may be implemented to be flexible, transparent, or wearable. The panel 262 may also be incorporated into one module together with the touch panel 252. The hologram unit 264 is capable of showing a stereoscopic image in the air by using light interference. The projector 266 is capable of displaying an image by projecting light onto a screen. The screen may be located inside or outside of the electronic device 201. According to an embodiment, the display 260 may further include a control circuit for controlling the panel 262, the hologram unit 264, or the projector 266.

The interface 270 is capable of including an HDMI 272, a USB 274, an optical interface 276, or a D-subminiature (D-sub) 278. The interface 270 may be included in the communication interface 107 shown in FIG. 1. Additionally or alternatively, the interface 270 is capable of including a mobile high-definition link (MHL) interface, an SD card/MMC interface, or an IR data association (IrDA) standard interface.

The audio module 280 is capable of providing bidirectional conversion between a sound and an electronic signal. At least part of the components in the audio module 280 may be included in the input/output interface 105 shown in FIG. 1. The audio module 280 is capable of processing sound information input or output through a speaker 282, a receiver 284, earphones 286, microphone 288, etc.

The camera module 291 refers to a device capable of taking both still and moving images. According to an embodiment, the camera module 291 is capable of including one or more image sensors (e.g., a front image sensor or a rear image sensor), a lens, an image signal processor (ISP), a flash (e.g., an LED or xenon lamp), etc.

The power management module 295 is capable of managing power of the electronic device 201. According to an embodiment, the power management module 295 is capable of including a power management IC (PMIC), a charger IC, or a battery or fuel gauge. The PMIC may employ wired charging and/or wireless charging methods. Examples of the wireless charging method are magnetic resonance charging, magnetic induction charging, and electromagnetic charging. To this end, the PMIC may further include an additional circuit for wireless charging, such as a coil loop, a resonance circuit, a rectifier, etc. The battery gauge is capable of measuring the residual capacity, charge in voltage, current, or temperature of the battery 296. The battery 296 takes the form of either a rechargeable battery or a solar battery.

The indicator 297 is capable of displaying a specific status of the electronic device 201 or a part thereof (e.g., the processor 210), e.g., a boot-up status, a message status, a charging status, etc. The motor 298 is capable of converting an electrical signal into mechanical vibrations, such as, a vibration effect, a haptic effect, etc. Although not shown, the electronic device 201 is capable of further including a processing unit (e.g., GPU) for supporting a mobile TV. The processing unit for supporting a mobile TV is capable of processing media data pursuant to standards, e.g., digital multimedia broadcasting (DMB), digital video broadcasting (DVB), or mediaFlo^{™}, etc.

Each of the elements described in the present disclosure may be formed with one or more components, and the names of the corresponding elements may vary according to the type of the electronic device. In various embodiments, the electronic device may include at least one of the above described elements described in the present disclosure, and may exclude some of the elements or further include other additional elements. Further, some of the elements of the electronic device according to various embodiments may be coupled to form a single entity while performing the same functions as those of the corresponding elements before the coupling.

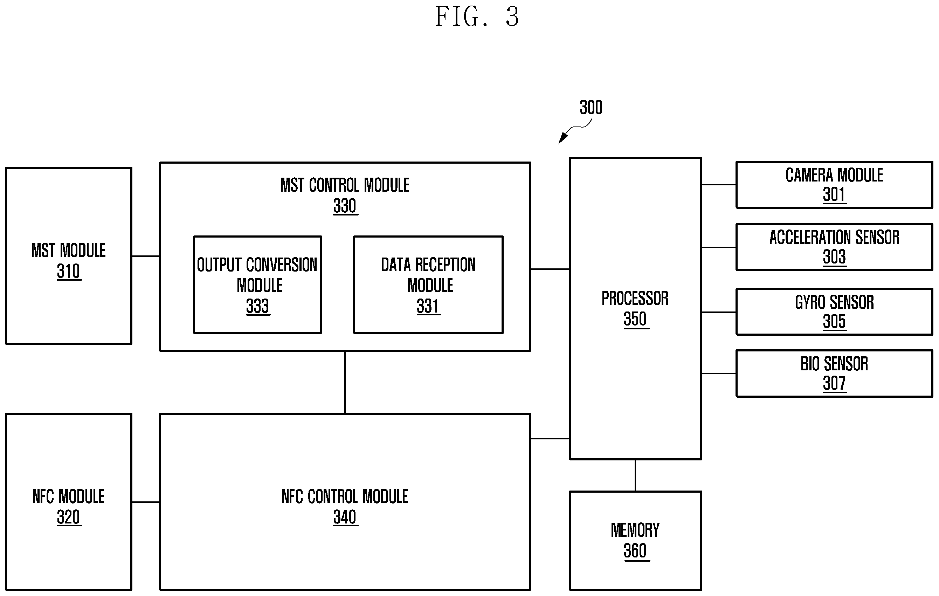

FIG. 3 is a block diagram 300 illustrating a hardware structure of an electronic device (e.g., electronic device 101) that can perform a payment function according to an embodiment of the present disclosure.

Referring to FIG. 3, in an embodiment of the present disclosure, an electronic device may include, for example, a camera module 301, an acceleration sensor 303, a gyro sensor 305, a bio sensor 307, an MST module 310, an NFC module 320, an MST control module 330, an NFC control module 340, a processor 350, and a memory 360. The camera module 301 may acquire card information through photographing of a card that is required for transaction. The camera module 301 may recognize the card information (e.g., card company, card number, card expiration date, card owner, and the like) inscribed on the card through an optical character reader/recognition (OCR) function. Further, a user may input the necessary card information to the electronic device using an input device (e.g., touch panel, pen sensor, key, ultrasonic input device, or microphone input device) included in the electronic device.

In an embodiment, the acceleration sensor 303 or the gyro sensor 305 may acquire a location state of the electronic device during payment. The acquired location state of the electronic device (e.g., electronic device 101) is transferred to the processor 350, and the processor 350 may adjust the strength (current strength) of magnetic field that is output from the MST module 310 to POS on the basis of the acquired location state of the electronic device. If a plurality of coil antennas is provided, the processor 350 may select one of the coil antennas being used. In an embodiment, the MST control module 330 may include a data reception module 331 and an output conversion module 333. The data reception module 331 may receive a pulse signal of logical low/high type that includes payment information that is transmitted by the processor 350 or a security module (e.g., eSE).

The output conversion module 333 may include a circuit that converts data into a required type in order to transfer the data that is recognized by the data reception module 331 to the MST module 310. The above-described circuit may include an H-bridge that controls the direction of a voltage that is applied at both ends of the MST module 310. The H-bridge may include a circuit structure in which four switch structures are used to be connected in "H" shape.

In an embodiment, on the basis of the card information that is input through the camera module 301 or the input device (e.g., touch panel or pen sensor), the electronic device may receive the payment information (e.g., track 1/2/3 or token information) that is included in a magnetic stripe of a magnetic card from a card company or a bank server through a communication module (not illustrated) and may store the received payment information in a form that is required for the memory 360 or a separate security module (e.g., eSE) 236.

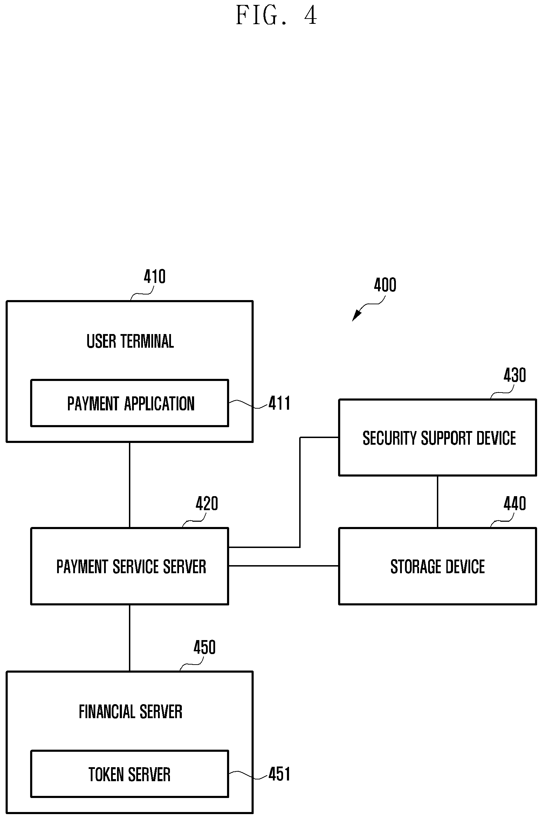

FIG. 4 is a diagram illustrating a payment system according to an embodiment of the present disclosure.

Referring to FIG. 4, a payment system 400 may include a user terminal 410, a payment service server 420, a security support device 430, a storage device 440, and a financial server 450. The payment service server 420, the security support device 430, and the storage device 440 may be configured as one device. For example, the payment service server 420 may perform functions of the security support device 430 and the storage device 440.

The user terminal 410 includes a payment application (or wallet application) 411. In addition, the user terminal 410 may include the whole or a part of the electronic device 101 as illustrated in FIG. 1 or the electronic device 201 as illustrated in FIG. 2.

The payment application 411 may include Samsung Pay application, and provides a user interface (e.g., user interface (UI) or user experience (UX)) related to payment. The payment related user interface may include a wallet UI/UX). The payment application 411 provides a user interface related to card registration, payment, or transactions. The payment application 411 may provide an interface related to card registration through a character reader (e.g., OCR) or an external input (e.g., user input). Further, the payment application 411 may provide an interface related to user authentication for card registration or payment.

The user terminal 410 may perform card registration using the payment application 411. For example, a user may proceed with the card registration without selecting a card company through the terminal 410. The user terminal 410 receives information on a transaction card or an account, which is used for the payment, through the user interface (e.g., input device 250) or the image acquisition device (e.g., camera module 291). For example, the received information may include a credit card number, a membership card number, a gift card number, a debit card number, an account number, or a gift certificate number. The received information, for example, a part of the card number (so called bank identification number (BIN) code), may be used as information for discrimination between card companies. The user terminal 410 displays a window for inputting the card number. In response to an input of a BIN code through such an input window, the user terminal 410 may transmit a policy request message for card registration to the payment service server 420. For example, the policy request message may include a BIN code, terminal identification information, and user information for member identification of a payment service. In addition, the policy request message includes, for example, location information of the user terminal 410 for enabling the payment service server 420 to set the security level of the policy.

The user terminal 410 receives a response message that includes information corresponding to a policy that is established by the payment service server 420 from the payment service server 420. For example, the response message may include information indicating a target for encryption, agreement information, official announcement, payment possible area, and payment possible level. If the response message is received, the user terminal 410 displays a card registration screen through a user interface (e.g., display 260). The card registration screen follows the established policy, and may include card company information (e.g., card company name, card company logo, image indicating a card company, and the like), and essential input items (e.g., item for inputting first two digits of a card secret number, card verification code (CVC) input item, resident registration number input item, mobile phone number input item, and the like). Further, the card registration screen may include a security keypad according to the established policy. For example, key arrangements of the security keypad may differ depending on the established policy. The user terminal 410 may receive input information through an input device (e.g., input device 250) in a state where the card registration screen is displayed, and may display the input information on the corresponding item. In this case, according to the policy, a specific symbol (e.g., "*") may be displayed instead of the input information (e.g., CVC number).

The user terminal 410 transmits a registration request message that includes data input onto the items to the payment service server 420, and receives the result of registration from the payment service server 420 in response to the registration request message. If the result of registration corresponds to card registration approval, the user terminal 410 may receive a token that corresponds to a card number from the financial server 450 through the payment service server 420 (or directly from the financial server 450) and may store the received token in the memory to complete the card registration.

The user terminal 410 may perform payment using the payment application 411. A user may perform a payment function using the payment application 411, and may be provided with information related to the payment function from the user terminal 410.

The payment service server 420 may recognize an issuance company of a card of which the registration is requested using the information received from the user terminal 410, and may determine "policy for card registration" that corresponds to the recognized card company. For example, a processor of the payment service server 420 may recognize the card company using the information (e.g., BIN code and/or location information of the user terminal 410) that is received from the user terminal 410 through the communication module, and may acquire the policy for the card registration of the recognized card company from the external device (e.g., storage device 440) through the communication module. Further, the processor of the payment service server 420 may request the policy for the card registration from a server (e.g., financial server 450) of the identified card company through the communication module, receive a response to such a request from the server through the communication module, and acquire the policy from the received response.

The payment service server 420 determines the security level of the card registration using the information that is received from the user terminal 410, and determines the policy on the basis of the security level. For example, the security support device 430 may receive the user information from the user terminal 410 through the payment service server 420, recognize that the user who has requested the card registration is a member of the payment service through the received user information, and confirm the residential area (e.g., nation) of the member through accessing information on the member that is stored in the storage device 440. The security support device 430 receives location information from the user terminal 410 through the payment service server 420, and determines whether the received location information corresponds to the confirmed residential area of the member. If the received location information means the location in the confirmed residential area of the member as the result of the determination, the security support device 430 sets a low security level. If the received location information has no relation with the residential area as the result of the determination, the security support device 430 sets a relatively high security level. The processor of the payment service server 420 may receive information that indicates the set security level through the communication level, and may determine the policy using the received information.

The payment service server 420 may transmit a response message that includes information corresponding to the determined "card company's policy", for example, the essential input item, the security item, and the security keypad, to the user terminal 410. Further, in the case of the policy that sets the high security level, the response message further includes an additional input item (e.g., user authentication using a mobile phone or an automatic response service (ARS)). That is, if a thief or an illegal use of the card is dubious, the payment service server 420 may request the user terminal 410 to provide additional information in addition to the essential information in order to prevent the illegal use of the card.

The payment service server 420 may manage the policy of the card company. For example, as a card is newly developed, a new policy may be established, partial contents of the policy may be changed (e.g., although a user was previously required to provide a part of the card secret number, the user is required to provide the whole card secret number in accordance with the changed policy), or the policy may be discarded due to vanishing of the previous card. The payment service server 420 may receive information on such policy change from a server (e.g., financial server 450) of the card company, and may update the information in the storage device 440. Further, the payment service server 420 may receive information on a card user (e.g., information on an inferior member or a superior member) from the server of the card company, and may store the received information in the storage device 440. The received information on the card user may be used to determine the policy.

The payment service server 420 may manage the payment. For example, the payment service server 420 may transmit "items for payment", which correspond to the policy established when the card registration is performed, to the user terminal 410. In an embodiment, the payment service server 420 may request the user terminal 410 that has requested the payment to perform user authentication. In this case, a user authentication method may differ for each card company. For example, user authentication for payment request of an A card may include authentication through an input of a secret number. User authentication for payment request of a B card may include authentication through an input of a secret number and a fingerprint. If the user authentication is completed, the user terminal 410 may transmit payment information (e.g., token) that corresponds to the above-described items to the payment service server 420. The payment service server 420 may transmit the payment information to an external device (e.g., server of the corresponding card company) or may perform the payment. In another embodiment, when the user terminal 410 requests payment, the payment service server 420 requests the user terminal 410 to perform user authentication with enforced security. The user terminal 410 transmits location information of the user terminal 410 to the payment service server 420 together with the payment request. The payment service server 420 may confirm the residential area (e.g., nation) of a member through accessing information of the corresponding member that is stored in the storage device 440. The payment service server 420 determines whether the received location information corresponds to the confirmed residential area of the member. If the received location information means a location in the confirmed residential area of the member as the result of the determination, the payment service server 420 requests the user terminal 410 to perform user authentication having a low security level (e.g., user authentication through an input of a secret number). If the received location information has no relation with the residential area as the result of the determination, the payment service server 420 requests the user terminal 410 to perform user authentication having a relatively high security level (e.g., user authentication through an input of a secret number and a fingerprint).

The payment service server 420 may manage card information associated with a service account (e.g., Samsung account) or a user account (e.g., user's email address). Further, the payment service server 420 may include an API server that is related to the payment application 411. Further, the payment service server 420 may provide an account management module (e.g., account integration or Samsung account integration). The payment service server 420 may transmit/receive information between the user terminal 410 and a token server (not illustrated). Further, the payment service server 420 may perform issuance, deletion, or activation of payment related information (e.g., token).

The financial server 450 may include a token server 451. The financial server 450 may generate information that is required for payment and is provided to the user. The financial server 450 may store the generated information in the user terminal 410, the payment service server 420, or the storage device 440. The financial server 450 may be functionally connected to the payment service server 420 to transmit/receive the policy that is required for the card registration. The token server 451 may generate or manage the payment related information (e.g., token). For example, the token server 451 may generate and transfer a token to the user terminal 410 without passing through the payment service server 420. The user terminal 410 may use the transferred token during the payment.

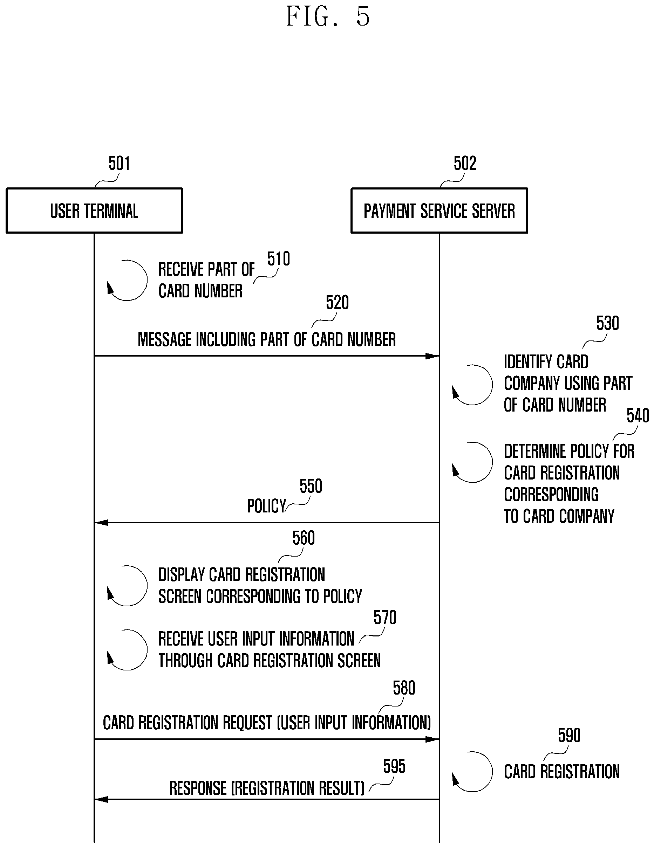

FIG. 5 is a flowchart explaining a card registration method according to an embodiment of the present disclosure.

Referring to FIG. 5, at operation 510, a user terminal 501 (e.g., user terminal 410) receives a part of a card number through an input device. In response to the reception, at operation 520, the user terminal 501 transmits a message that includes the received part of the card number to a payment service server 502 (e.g., payment service server 420). The message may further include terminal identification information (e.g., mobile phone number), terminal location information (e.g., GPS information), and user information (e.g., account of a user (member) subscribed in a payment service system.

At operation 530, the payment service server 502 identifies a card company using a part of the card number included in the received message. At operation 540, the payment service server 502 determines a policy for card registration corresponding to the card company. In this case, the terminal location information is additionally considered in determining the policy. For example, the location of a payment service member (user) is recognized through the terminal location information, and if the recognized location does not correspond to a residential area that is known by the server 502, a high security level is set to determine the policy that corresponds to the set security level. At operation 550, the payment service server 502 may transmit the determined policy to the user terminal 501.

At operation 560, the user terminal 501 displays a card registration screen that corresponds to the received policy through a user interface (e.g., display 260). In an embodiment, the policy may include data that indicates the card company and data that indicates the security level. Accordingly, the user terminal 501 displays input items that correspond to the data. In another embodiment, the policy may include input items according to the card company and the security level. Accordingly, the user terminal 501 may display the received input items.

At operation 570, the user terminal 501 receives user input information through the card registration screen. At operation 580, the user terminal 501 transmits a card registration request message that includes the user input information to the payment service server 502.

At operation 590, the payment service server 502 verifies the user input information, and if there is no abnormality, the payment service server 502 may register the user's card in a payment service system (e.g., storage device 440) so that the payment can be performed using the user terminal 501.

At operation 595, the payment service server 502 may transmit the result of registration to the user terminal.

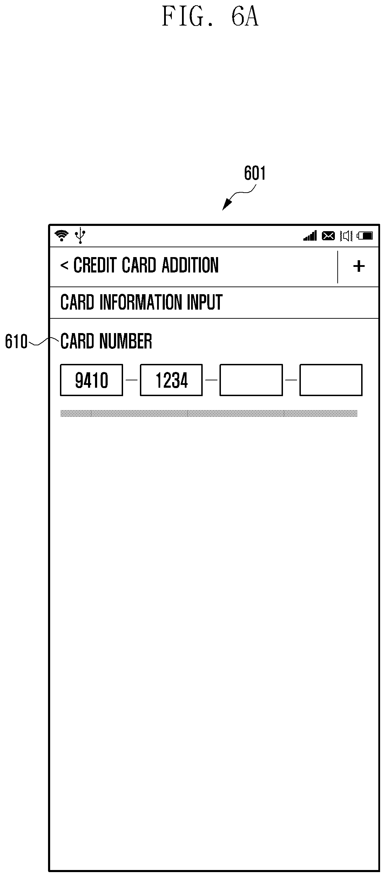

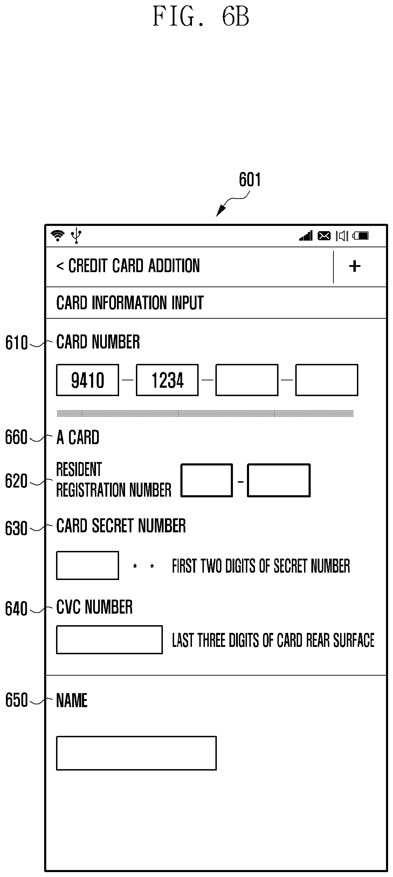

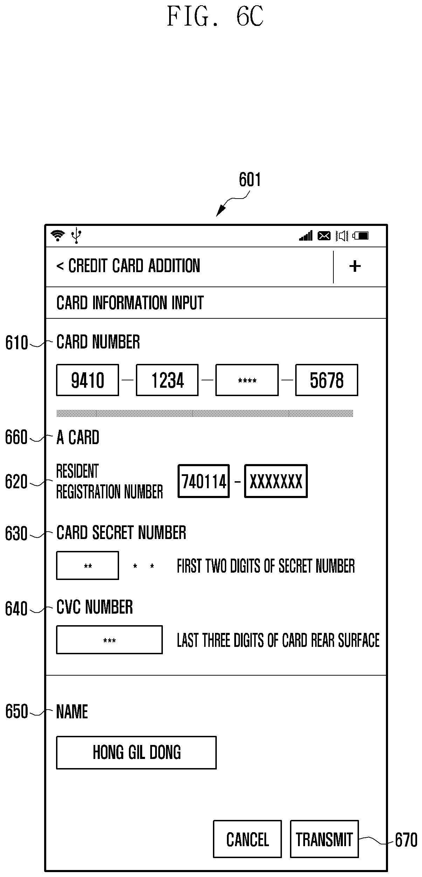

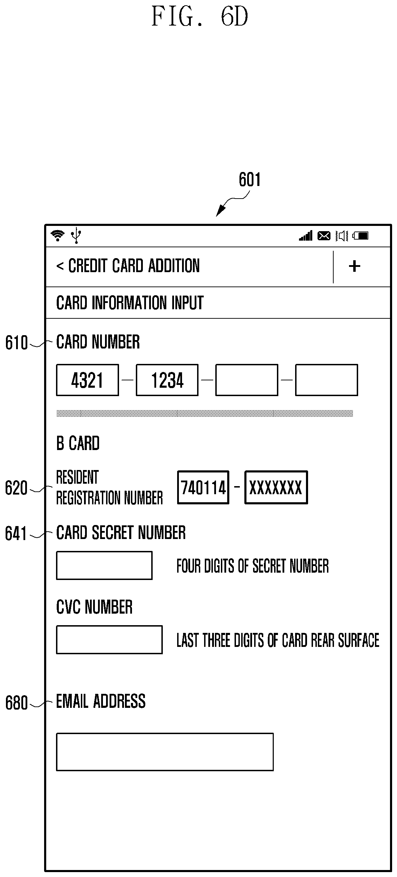

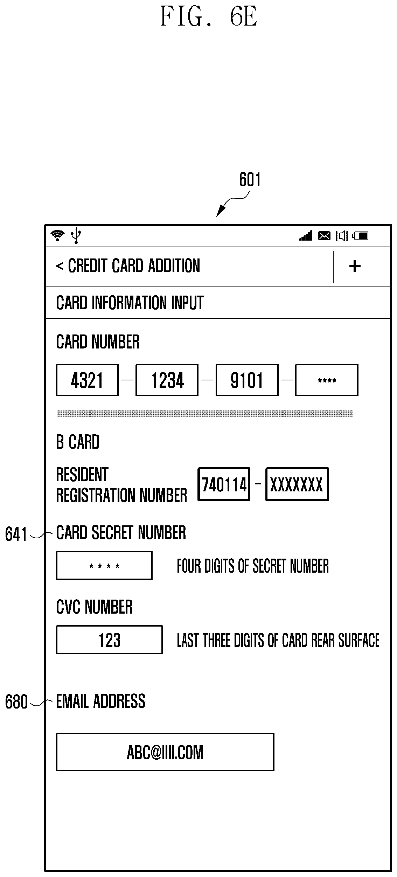

FIGS. 6A, 6B, 6C, 6D, and 6E illustrate user interfaces for card registration according to an embodiment of the present disclosure.

Referring to FIG. 6A, a user terminal 601 (e.g., user terminal 410) displays an item 610 for inputting a card number. If four numbers are input into first and second blanks of the item 610, the user terminal 601 may transmit 8-digit figures (i.e., BIN code) to a payment service server (e.g., payment service server 420). For example, the user terminal 601 may display a keypad, receive the card number from a user, and display the received card number at the item 610. Thereafter, the user terminal 601 may receive a policy for card registration from the payment service server, and displays additional items for the card registration as shown in FIG. 6B corresponding to the policy.

Referring to FIG. 6B, the user terminal 601 may further display an item 620 for inputting a resident registration number, an item 630 for inputting a card secret number, an item 640 for inputting a CVC number of the card, an item 650 for inputting a user's name, and information 660 indicating the identified card company (e.g., A card). Here, certain items may be omitted in accordance with the policy. For example, if the determined policy has a low security level, the item 620 may be omitted, and only other items may be displayed. A specific symbol as illustrated in FIG. 6C may be displayed instead of the input information.

Referring to FIG. 6C, the user terminal 601 may display a symbol "*" instead of the information input by the user. For example, the symbol "*" may be displayed instead of each of figures input into the third blank of the item 610, the second blank of the item 620, the item 630, and the item 640. If the user requests the card registration (e.g., if a transmission button 670 is selected) after a mobile phone authentication succeeds, the user terminal 601 may transmit the input information to the payment service server. Here, the information may be transmitted after being encrypted.

The input items may differ for card companies. Referring to FIG. 6D, if the identified card company corresponds to "B card", the user terminal 601 may request an input of four digits 641 of the card secret number. Further, the user terminal 601 may not request the mobile phone authentication. Instead, the user terminal 601 may request an input of another input item, for example, an email ID 680.

The display of the specific symbol may differ for each card company. Referring to FIG. 6E, "****" may be displayed in the fourth blank of the card number. As a CVC number, unlike FIG. 6D, input figures may be displayed.

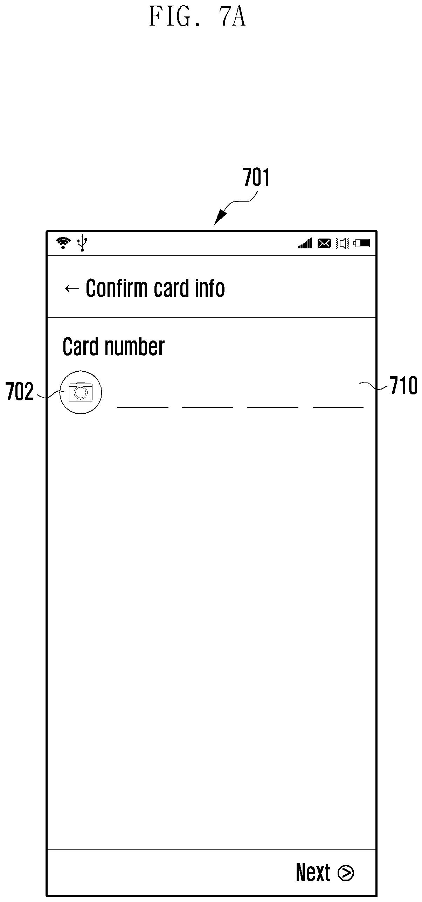

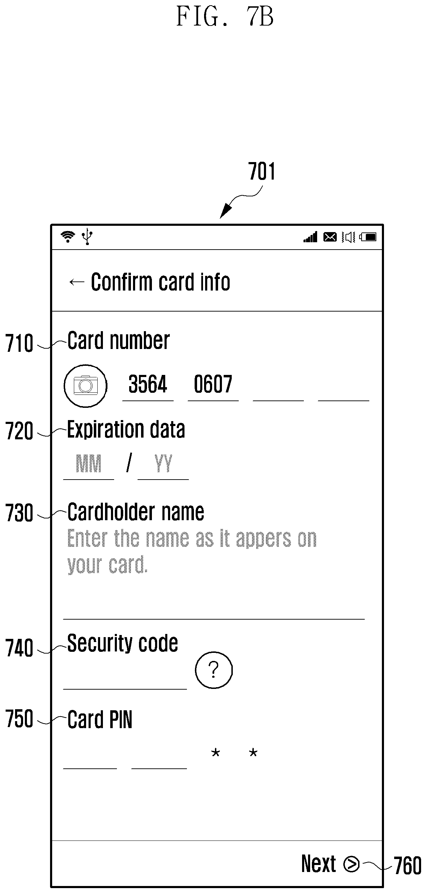

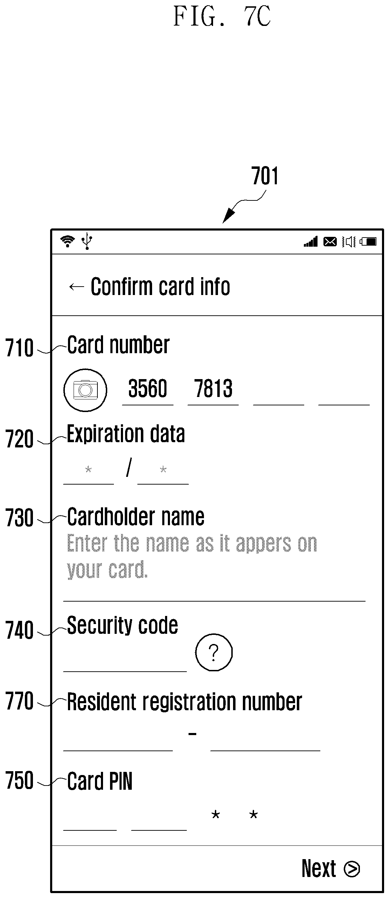

FIGS. 7A, 7B, and 7C illustrate user interfaces for card registration according to an embodiment of the present disclosure.

Referring to FIG. 7A, a user terminal 701 (e.g., user terminal 410) displays an item 710 for inputting a card number. For example, the user terminal 701 may display a keypad, receive the card number from a user through the keypad, and display the received card number at the item 710. As another example, if the user selects a camera icon 702, the user terminal 701 may drive a camera, receive an image from the camera, and acquire the card number from the image to display the acquired card number at the item 710. The user terminal 701 may transmit 8-digit figures that are input through the first and second blanks of the item 710 to a payment service server (e.g., payment service server 420). Thereafter, the user terminal 701 may receive a policy for card registration from the payment service server, and may display items for the card registration of, for example, A Card Company, as shown in FIG. 7B corresponding to the policy.

Referring to FIG. 7B, the user terminal 701 may further display an item 720 for inputting an expiration date of the card, an item 730 for inputting a name of a card user, an item 740 for inputting a security code (e.g., CVC), and an item 750 for inputting a card secret number. Further, the user terminal may further display an additional item. For example, if the user selects a button 760, the user terminal 701 may further display the additional item.

If the identified card company is, for example, B Card Company, the item that is required for the card registration may differ. For example, referring to FIG. 7C, the user terminal 701 may further display an item 770 for inputting a resident registration number.

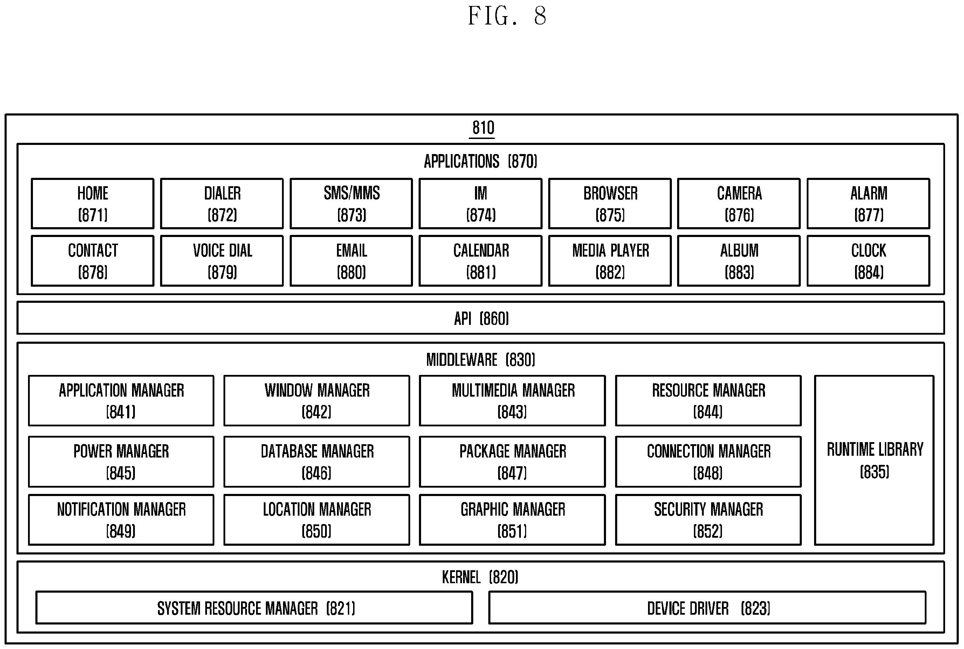

FIG. 8 is a block diagram of a programming module according to an embodiment of the present disclosure.

Referring to FIG. 8, according to an embodiment, the program module 810 (e.g., program module 104 shown in FIG. 1) is capable of including an OS for controlling resources related to the electronic device (e.g., electronic device 101) and/or various applications (e.g., application programs 104D shown in FIG. 1) running on the OS. The OS may be Android, iOS, Windows, Symbian, Tizen, Bada, etc.

The program module 810 is capable of including a kernel 820, middleware 830, API 860 and/or applications 870. At least part of the program module 810 may be preloaded on the electronic device or downloaded from a server (e.g., an electronic device 109A or 109B, server 109C, etc.).

The kernel 820 (for example, kernel 104A) may include a system resource manager 821 and/or a device driver 823. The system resource manager 821 may include, for example, a process manager, a memory manager, and a file system manager. The system resource manager 821 may perform a system resource control, allocation, and recall. The device driver 823 may include, for example, a display driver, a camera driver, a Bluetooth driver, a shared memory driver, a USB driver, a keypad driver, a Wi-Fi driver, and an audio driver. Further, according to an embodiment, the device driver 823 may include an inter-process communication (IPC) driver.

The middleware 830 may provide a function required in common by the applications 870. Further, the middleware 830 may provide a function through the API 860 to allow the applications 870 to efficiently use limited system resources within the electronic device. According to an embodiment, the middleware 830 (for example, the middleware 104B) may include at least one of a runtime library 835, an application manager 841, a window manager 842, a multimedia manager 843, a resource manager 844, a power manager 845, a database manager 846, a package manager 847, a connection manager 848, a notification manager 849, a location manager 850, a graphic manager 851, and a security manager 852.

The runtime library 835 may include, for example, a library module used by a complier to add a new function through a programming language while the applications 870 are executed. According to an embodiment, the runtime library 835 executes input and output, management of a memory, a function associated with an arithmetic function and the like.

The application manager 841 may manage, for example, a life cycle of at least one of the applications 870. The window manager 842 may manage GUI resources used on the screen. The multimedia manager 843 may detect a format required for reproducing various media files and perform an encoding or a decoding of a media file by using a codec suitable for the corresponding format. The resource manager 844 manages resources such as a source code, a memory, or a storage space of at least one of the applications 870.

The power manager 845 may operate together with a basic input/output system (BIOS) to manage a battery or power and provides power information required for the operation. The database manager 846 may manage generation, search, and change of a database to be used by at least one of the applications 870. The package manager 847 may manage an installation or an update of an application distributed in a form of a package file.

The connection manager 848 may manage, for example, a wireless connection such as Wi-Fi or Bluetooth. The notification manager 849 may display or notify a user of an event such as an arrival message, an appointment, a proximity alarm or the like, in a manner that does not disturb the user. The location manager 850 may manage location information of the electronic device. The graphic manager 851 may manage a graphic effect provided to the user or a user interface related to the graphic effect. The security manager 852 provides a general security function required for a system security or a user authentication. According to an embodiment, when the electronic device (for example, the electronic device 101) has a call function, the middleware 830 may further include a telephony manager for managing a voice of the electronic device or a video call function.

The middleware 830 is capable of including modules configuring various combinations of functions of the above described components. The middleware 830 is capable of providing modules specialized according to types of operation systems to provide distinct functions. The middleware 830 may be adaptively configured in such a way as to remove part of the existing components or to include new components.

The API 860 (for example, API 104C) may be a set of API programming functions, and may be provided with a different configuration according to an OS. For example, in Android or iOS, a single API set may be provided for each platform. In Tizen, two or more API sets may be provided.

The applications 870 (e.g., application programs 104D) may include one or more applications for performing various functions, e.g., home 871, dialer 872, SMSINMS 873, instant message (IM) 874, browser 875, camera 876, alarm 877, contact 878, voice dial 879, email 880, calendar 881, media player 882, album 883, clock 884, health care (e.g., an application for measuring amount of exercise, blood sugar level, etc.), and environment information (e.g., an application for providing atmospheric pressure, humidity, temperature, etc.).

According to an embodiment, the applications 870 are capable of including an application for supporting information exchange between an electronic device (e.g., electronic device 101) and an external device (e.g., electronic devices 109A and 109B), which is hereafter called 'information exchange application'). The information exchange application is capable of including a notification relay application for relaying specific information to external devices or a device management application for managing external devices.

For example, the notification relay application is capable of including a function for relaying notification information, created in other applications of the electronic device (e.g., SMS/MMS application, email application, health care application, environment information application, etc.) to external devices (e.g., electronic devices 109A and 109B). In addition, the notification relay application is capable of receiving notification information from external devices to provide the received information to the user.

The device management application is capable of managing (e.g., installing, removing or updating) at least one function of an external device (e.g., electronic devices 109A and 109B) communicating with the electronic device. Examples of the function are a function of turning-on/off the external device or part of the external device, a function of controlling the brightness (or resolution) of the display, applications running on the external device, services provided by the external device, etc. Examples of the services are a call service, messaging service, etc.

According to an embodiment, the applications 870 are capable of including an application (e.g., a health care application of a mobile medical device, etc.) specified attributes of an external device (e.g., electronic devices 109A and 109B). According to an embodiment, the applications 870 are capable of including applications received from an external device (e.g., a server 109C, electronic devices 109A and 109B). According to an embodiment, the applications 870 are capable of including a preloaded application or third party applications that can be downloaded from a server. It should be understood that the components of the program module 810 may be called different names according to types of OSs.

According to various embodiments, at least part of the program module 810 can be implemented with software, firmware, hardware, or any combination of two or more of them. At least part of the program module 810 can be implemented (e.g., executed) by a processor (e.g., processor 102). At least part of the programing module 810 may include modules, programs, routines, sets of instructions or processes, etc., in order to perform one or more functions.

Various embodiments of the present disclosure provide a handheld electronic device capable of transmitting, to a card reading apparatus, card information carried by magnetic field signals, and thus making payment for costs. Various embodiments also provide a handheld electronic device capable of making payment for costs, etc., through communication with a card reading apparatus, although the apparatus is not equipped with an NFC module, without modifying the existing solution, as if a magnetic card is used against the apparatus. Therefore, the present disclosure is capable of leading to activating offline mobile payment.

The term 'module' as used in various embodiments of the present disclosure may mean a unit including one of hardware, software, and firmware or any combination of two or more of them. The 'module' may be interchangeable with the term 'unit,' 'logic,' `logical block,' 'component,' or 'circuit.' The 'module' may be the smallest unit of an integrated component or a part thereof. The 'module' may be the smallest unit that performs one or more functions or a part thereof. The 'module' may be mechanically or electronically implemented. For example, the 'module' according to various embodiments of the present disclosure may include at least one of the following: application-specific IC (ASIC) chips, field-programmable gate arrays (FPGAs), and programmable-logic devices for performing certain operations, which are now known or will be developed in the future.

At least part of the method (e.g., operations) or system (e.g., modules or functions) according to various embodiments can be implemented with instructions as programming modules that are stored in computer-readable storage media. One or more processors (e.g., processor 102) can execute instructions, thereby performing the functions. An example of the computer-readable storage media may be a memory 103. At least part of the programming modules can be implemented (executed) by a processor. At least part of the programing module may include modules, programs, routines, sets of instructions or processes, etc., in order to perform one or more functions.

Examples of computer-readable media include: magnetic media, such as hard disks, floppy disks, and magnetic tape; optical media such as compact disc ROMs (CD-ROMs) and DVD; magneto-optical media, such as floptical disks; and hardware devices that are specially configured to store and perform program instructions (e.g., programming modules), such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

Modules or programming modules according to various embodiments may include one or more components, remove part of them described above, or include new components. The operations performed by modules, programming modules, or the other components, according to various embodiments, may be executed in serial, parallel, repetitive or heuristic fashion. Part of the operations can be executed in any other order, skipped, or executed with additional operations.

## Claims

1. An electronic device comprising:
a touch panel;
a display;
a memory configured to store a payment application program;
a communication circuit; and
a processor operatively coupled to the touch panel, the display, the memory, and the communication circuit,
wherein the memory stores instructions to cause the processor, when executed, to:
receive, via the touch panel, using an execution screen of the payment application program, a first user input corresponding to only a part of an entire card number on a payment card,
in response to the first user input, transmit the received part of the card number to an external device through the communication circuit,
receive first information, which is a response to transmitting the received part of the card number to the external device, from the external device through the communication circuit,
in a state of the execution screen of the payment application program having received the part of the card number:
if the received first information relates to a first card company, display a first card registration screen on the display in response to receiving the first information, and
if the received first information relates to a second card company, display a second card registration screen on the display in response to receiving the first information, the second card registration screen being at least partially different from the first card registration screen,
receive, via the touch panel, using the execution screen of the payment application program, a second user input corresponding to second information and rest of the card number through the touch panel, the second information corresponding to an input item included in the first card registration screen or the second card registration screen, and
after the second user input is received, transmit the second information and the rest of the card number of the payment card to the external device through the communication circuit,
wherein the instructions cause the processor to transmit, to the external device through the communication circuit, the received part of the card number along with location information of the electronic device,
wherein the first information received from the external device is based on a security level and the security level is based on the location information transmitted to the external device,
wherein the location information is based on GPS information,
wherein when the location information does not match a residential area of a card user, a higher security level for authentication is applied than a security level for authentication when the location information matches the residential area of the card user,
wherein the higher security level for authentication includes requesting additional information for user authentication via the execution screen of the payment application program, the additional information not being requested for the lower security level,
wherein the additional information includes a fingerprint input from a fingerprint sensor.

2. The electronic device of claim 1, wherein the first information comprises information related to at least one of:
a card company, an essential input item, an additional input item, a security item, or a security keypad.

3. The electronic device of claim 1, wherein the input item comprises a user interface displayed for receiving at least one of a card secret number, a card verification code, CVC, a resident registration number, an email address, or a mobile phone number.

4. The electronic device of claim 1, wherein the second information comprises information related to at least one of:
a card secret number, a card verification code, CVC, a resident registration number, an email address, or a mobile phone number.

5. The electronic device of claim 1,
wherein the first card registration screen comprises at least one of a first card company name, a first card company logo, a first card company-related image, or a first input item, and
wherein the second card registration screen comprises at least one of a second card company name, a second card company logo, a second card company-related image, or a second input item.

6. The electronic device of claim 1, wherein the instructions cause the processor to display the received second information on at least a part of the display, wherein symbols are displayed instead of figures in the received second information.

7. The electronic device of claim 1, wherein the instructions cause the processor to display the received second information on at least a part of the display, wherein:
if the received first information relates to the first card company, symbols are displayed instead of first figures in the received second information,
if the received first information relates to the second card company, symbols are displayed instead of second figures in the received second information, and
the number of the first figures is different from the number of the second figures, or a place of the first figures is different from a place of the second figures.

8. The electronic device of claim 1, wherein the instructions cause the processor to display a security keypad for receiving the second information on at least a part of the display,
wherein:
if the received first information relates to the first card company, the security keypad has a first key arrangement, and
if the received first information relates to the second card company, the security keypad has a second key arrangement.

9. The electronic device of claim 1, wherein the received part of the card number includes a bank identification number, BIN, of the payment card.

10. The electronic device of claim 1, wherein the instructions cause the processor to transmit, to the external device through the communication circuit, the received part of the card number along with at least one of:
user information for identifying a member of a payment service, or
identification information of the electronic device.

11. The electronic device of claim 1, wherein the instructions cause the processor to receive payment data corresponding to the payment card from another external device through the communication circuit,
wherein the instructions cause the processor to store the received payment data in the memory or a security module, and
wherein the electronic device further comprises at least one coil antenna, wherein the instructions cause the processor to transmit to an outside, using the at least one coil antenna, a magnetic-based signal including the received payment data.

12. The electronic device of claim 1, further comprising a microphone as an input device, wherein the instructions cause the processor to receive at least one of the first information or the second information through the microphone.

13. The electronic device of claim 1, further comprising a camera operatively coupled to the processor,
wherein the processor receives the part of the entire card number through the camera instead of the touch panel.

14. The electronic device of claim 1,
wherein the first card registration screen comprises the part of the entire card number, entry locations, relating to the first card company, for receiving the second information, and entry locations, relating to the first card company, for receiving the rest of the entire card number, and
wherein the second card registration screen comprises the part of the entire card number, entry locations, relating to the second card company, for receiving the second information, and entry locations, relating to the second card company, for receiving the rest of the entire card number.

## Patentansprüche

1. Elektronische Vorrichtung, die Folgendes umfasst:
ein Berührungsfeld;
ein Display;
einen Speicher, der zum Speichern eines Zahlungsanwendungsprogramms konfiguriert ist;
eine Kommunikationsschaltung; und
einen Prozessor, der operativ mit dem Berührungsfeld, dem Display, dem Speicher und der Kommunikationsschaltung verbunden ist,
wobei der Speicher Anweisungen speichert, die den Prozessor bei der Ausführung zu Folgendem veranlassen:
Empfangen einer ersten Benutzereingabe, die nur einem Teil einer gesamten Kartennummer auf einer Zahlungskarte entspricht, über das Berührungsfeld unter Verwendung eines Ausführungsbildschirms des Zahlungsanwendungsprogramms,
als Reaktion auf die erste Benutzereingabe, Übertragen des empfangenen Teils der Kartennummer über die Kommunikationsschaltung an eine externe Vorrichtung,
Empfangen erster Informationen, die eine Reaktion auf das Übertragen des empfangenen Teils der Kartennummer an die externe Vorrichtung sind, von der externen Vorrichtung über die Kommunikationsschaltung,
in einem Zustand des Ausführungsbildschirms des Zahlungsanwendungsprogramms, das den Teil der Kartennummer empfangen hat:
wenn sich die empfangenen ersten Informationen auf eine erste Kartengesellschaft beziehen, Anzeigen eines ersten Kartenregistrierungs-Screens auf dem Display als Reaktion auf den Empfang der ersten Informationen, und
wenn sich die empfangenen ersten Informationen auf eine zweite Kartengesellschaft beziehen, Anzeigen eines zweiten Kartenregistrierungs-Screens auf dem Display als Reaktion auf den Empfang der ersten Informationen, wobei sich der zweite Kartenregistrierungs-Screen zumindest teilweise von dem ersten Kartenregistrierungs-Screen unterscheidet,
Empfangen einer zweiten Benutzereingabe über das Berührungsfeld, die den zweiten Informationen und dem Rest der Kartennummer entspricht, über das Berührungsfeld, unter Verwendung des Ausführungsbildschirms des Zahlungsanwendungsprogramms, wobei die zweiten Informationen einem Eingabeelement, das in dem ersten Kartenregistrierungs-Screen oder dem zweiten Kartenregistrierungs-Screen enthalten ist, entsprechen, und
nachdem die zweite Benutzereingabe empfangen wurde, Übertragen der zweiten Informationen und des Restes der Kartennummer der Zahlungskarte über die Kommunikationsschaltung an die externe Vorrichtung,
wobei die Anweisungen den Prozessor veranlassen, den empfangenen Teil der Kartennummer zusammen mit Standortinformationen der elektronischen Vorrichtung über die Kommunikationsschaltung an die externe Vorrichtung zu übertragen,
wobei die ersten von der externen Vorrichtung empfangenen Informationen auf einer Sicherheitsstufe basieren und die Sicherheitsstufe auf den an die externe Vorrichtung übertragenen Standortinformationen basieren,
wobei die Standortinformationen auf GPS-Informationen basieren, wobei, wenn die Standortinformationen nicht mit einem Wohngebiet eines Kartenbenutzers übereinstimmen, eine höhere Sicherheitsstufe für die Authentifizierung angewendet wird als eine Sicherheitsstufe für die Authentifizierung, wenn die Standortinformationen mit dem Wohngebiet des Kartenbenutzers übereinstimmen,
wobei die höhere Sicherheitsstufe für die Authentifizierung das Anfordern zusätzlicher Informationen für die Benutzerauthentifizierung über den Ausführungsbildschirm des Zahlungsanwendungsprogramms enthält, wobei die zusätzlichen Informationen für die niedrigere Sicherheitsstufe nicht angefordert werden,
wobei die zusätzlichen Informationen die Eingabe eines Fingerabdrucks von einem Fingerabdrucksensor enthalten.

2. Elektronische Vorrichtung nach Anspruch 1, wobei die ersten Informationen Informationen umfassen, die sich auf mindestens eines von Folgendem beziehen:
eine Kartengesellschaft, ein wesentliches Eingabeelement, ein zusätzliches Eingabeelement, ein Sicherheitselement oder eine Sicherheitstastatur.

3. Elektronische Vorrichtung nach Anspruch 1, wobei das Eingabeelement eine Benutzerschnittstelle umfasst, die angezeigt wird, um eine Kartengeheimnummer, einen Kartenprüfcode, CVC, eine Einwohnerregistrierungsnummer, eine E-Mail-Adresse und/oder eine Mobiltelefonnummer zu empfangen.

4. Elektronische Vorrichtung nach Anspruch 1, wobei die zweiten Informationen Informationen umfassen, die sich auf mindestens eines von Folgendem beziehen:
einer Kartengeheimnummer, einem Kartenprüfcode, CVC, einer Einwohnerregistrierungsnummer, einer E-Mail-Adresse oder einer Mobiltelefonnummer.

5. Elektronische Vorrichtung nach Anspruch 1,
wobei der erste Kartenregistrierungs-Screen einen ersten Kartengesellschaftsnamen, einen ersten Kartenfirmenlogo, ein erstes kartengesellschaftsbezogenes Bild und/oder ein erstes Eingabeelement umfasst, und
wobei der zweite Kartenregistrierungs-Screen einen zweiten Kartenfirmennamen, einen zweiten Kartenfirmenlogo, ein zweites kartenfirmenbezogenes Bild und/oder ein zweites Eingabeelement umfasst.

6. Elektronische Vorrichtung nach Anspruch 1, wobei die Anweisungen den Prozessor veranlassen, die empfangenen zweiten Informationen auf mindestens einem Teil des Displays anzuzeigen, wobei Symbole anstelle von Zahlen in den empfangenen zweiten Informationen angezeigt werden.

7. Elektronische Vorrichtung nach Anspruch 1, wobei die Anweisungen den Prozessor veranlassen, die empfangenen zweiten Informationen auf mindestens einem Teil des Displays anzuzeigen, wobei:
wenn sich die empfangenen ersten Informationen auf die erste Kartengesellschaft beziehen, Anzeigen von Symbolen anstelle von ersten Zahlen in den empfangenen zweiten Informationen,
wenn sich die empfangenen ersten Informationen auf die zweite Kartengesellschaft beziehen, Anzeigen von Symbolen anstelle von zweiten Zahlen in den empfangenen zweiten Informationen, und
die Anzahl der ersten Zahlen sich von der Anzahl der zweiten Zahlen unterscheidet, oder eine Stelle der ersten Zahlen sich von einer Stelle der zweiten Zahlen unterscheidet.

8. Elektronische Vorrichtung nach Anspruch 1, wobei die Anweisungen den Prozessor veranlassen, eine Sicherheitstastatur zum Empfangen der zweiten Informationen auf mindestens einem Teil des Displays anzuzeigen,
wobei:
wenn sich die empfangenen ersten Informationen auf die erste Kartengesellschaft beziehen, die Sicherheitstastatur eine erste Tastenanordnung aufweist, und
wenn sich die empfangenen ersten Informationen auf die zweite Kartengesellschaft beziehen, die Sicherheitstastatur eine zweite Tastenanordnung aufweist.

9. Elektronische Vorrichtung nach Anspruch 1, wobei der empfangene Teil der Kartennummer eine Bankidentifikationsnummer, BIN, der Zahlungskarte enthält.

10. Elektronische Vorrichtung nach Anspruch 1, wobei die Anweisungen den Prozessor veranlassen, den empfangenen Teil der Kartennummer zusammen mit mindestens einem von Folgendem über die Kommunikationsschaltung an die externe Vorrichtung zu übertragen
Benutzerinformationen zum Identifizieren eines Mitglieds eines Zahlungsdienstes, oder
Identifikationsinformationen der elektronischen Vorrichtung.

11. Elektronische Vorrichtung nach Anspruch 1, wobei die Anweisungen den Prozessor veranlassen, Zahlungsdaten, die der Zahlungskarte entsprechen, von einer anderen externen Vorrichtung über die Kommunikationsschaltung zu empfangen,
wobei die Anweisungen den Prozessor veranlassen, die empfangenen Zahlungsdaten in dem Speicher oder einem Sicherheitsmodul zu speichern, und
wobei die elektronische Vorrichtung ferner mindestens eine Spulenantenne umfasst, wobei die Anweisungen den Prozessor veranlassen, unter Verwendung der mindestens einen Spulenantenne ein Signal auf Magnetbasis, das die empfangenen Zahlungsdaten enthält, nach außen zu übertragen.

12. Elektronische Vorrichtung nach Anspruch 1, die ferner ein Mikrofon als Eingabegerät umfasst, wobei die Anweisungen den Prozessor veranlassen, die ersten Informationen und/oder die zweiten Informationen über das Mikrofon zu empfangen.

13. Elektronische Vorrichtung nach Anspruch 1, die ferner eine Kamera umfasst, die operativ mit dem Prozessor gekoppelt ist,
wobei der Prozessor den Teil der gesamten Kartennummer durch die Kamera anstelle des Berührungsfelds empfängt.

14. Elektronische Vorrichtung nach Anspruch 1,
wobei der erste Kartenregistrierungs-Screen den Teil der gesamten Kartennummer, Eingabestellen, die sich auf die erste Kartengesellschaft beziehen, zum Empfangen der zweiten Informationen und Eingabestellen, die sich auf die erste Kartengesellschaft beziehen, zum Empfangen des Rests der gesamten Kartennummer umfasst, und
wobei der zweite Kartenregistrierungs-Screen den Teil der gesamten Kartennummer, Eingabestellen, die sich auf die zweite Kartengesellschaft beziehen, zum Empfangen der zweiten Informationen und Eingabestellen, die sich auf die zweite Kartengesellschaft beziehen, zum Empfangen des Rests der gesamten Kartennummer, umfasst.

## Revendications

1. Dispositif électronique comprenant :
un panneau tactile ;
une unité d'affichage ;
une mémoire configurée pour stocker un logiciel d'application de paiement ;
un circuit de communication ; et
un processeur couplé de manière opérative au panneau tactile, à l'unité d'affichage, à la mémoire, et au circuit de communication,
où la mémoire stocke des instructions pour amener le processeur, lorsqu'il est exécuté, à :
recevoir, via le panneau tactile, en utilisant un écran d'exécution du logiciel d'application de paiement, une première entrée d'utilisateur correspondant à seulement une partie d'un numéro de carte complet sur une carte de paiement,
en réponse à la première entrée d'utilisateur, transmettre la partie reçue du numéro de carte à un dispositif externe à travers le circuit de communication,
recevoir une première information, qui est une réponse à la transmission de la partie reçue du numéro de carte au dispositif externe, du dispositif externe à travers le circuit de communication,
dans un état de l'écran d'exécution du logiciel d'application de paiement ayant reçu la partie du numéro de carte :
si la première information reçue concerne une première entreprise de cartes, afficher un premier écran d'enregistrement de carte sur l'unité d'affichage en réponse à la réception de la première information, et
si la première information reçue concerne une deuxième entreprise de cartes, afficher un deuxième écran d'enregistrement de carte sur l'unité d'affichage en réponse à la réception de la première information, le deuxième écran d'enregistrement de carte étant au moins partiellement différent du premier écran d'enregistrement de carte,
recevoir, via le panneau tactile, en utilisant l'écran d'exécution du logiciel d'application de paiement, une deuxième entrée d'utilisateur correspondant à une deuxième information et un reste du numéro de carte à travers le panneau tactile, la deuxième information correspondant à un élément d'entrée inclus dans le premier écran d'enregistrement de carte ou dans le deuxième écran d'enregistrement de carte, et
après réception de la deuxième entrée d'utilisateur, transmettre la deuxième information et le reste du numéro de carte de la carte de paiement au dispositif externe à travers le circuit de communication,
où les instructions amènent le processeur à transmettre, au dispositif externe à travers le circuit de communication, la partie reçue du numéro de carte ainsi que des informations d'emplacement du dispositif électronique,
où la première information reçue du dispositif externe est basée sur un niveau de sécurité et le niveau de sécurité est basé sur les informations d'emplacement transmises au dispositif externe,
où les informations d'emplacement sont basées sur des informations GPS,
où lorsque les informations d'emplacement ne correspondent pas à une zone résidentielle d'un utilisateur de carte, un niveau de sécurité plus élevé pour l'authentification est appliqué par rapport à un niveau de sécurité pour l'authentification lorsque les d'informations d'emplacement correspondent à la zone résidentielle de l'utilisateur de la carte,
où le niveau de sécurité plus élevé pour l'authentification inclut demander des informations supplémentaires pour une authentification d'utilisateur via l'écran d'exécution du logiciel d'application de paiement, les informations supplémentaires n'étant pas demandées pour le niveau de sécurité inférieur,
où les informations supplémentaires incluent une entrée d'empreinte digitale d'un capteur d'empreintes digitales.

2. Dispositif électronique selon la revendication 1, où la première information comprend des informations relatives à au moins l'un entre :
une entreprise de cartes, un élément d'entrée essentiel, un élément d'entrée supplémentaire, un élément de sécurité, ou un clavier de sécurité.

3. Dispositif électronique selon la revendication 1, où l'élément d'entrée comprend une interface utilisateur affichée pour recevoir au moins l'un entre un numéro secret de carte, un code de vérification de carte, un CVC, un numéro d'enregistrement de résident, une adresse e-mail, ou un numéro de téléphone mobile.

4. Dispositif électronique selon la revendication 1, où la deuxième information comprend des informations relatives à au moins l'un entre :
un numéro secret de carte, un code de vérification de carte, un CVC, un numéro d'enregistrement de résident, une adresse e-mail, ou un numéro de téléphone mobile.

5. Dispositif électronique selon la revendication 1,
où le premier écran d'enregistrement de carte comprend au moins l'un entre un nom d'une première entreprise de cartes, un logotype d'une première entreprise de cartes, une image liée à une première entreprise de cartes, ou un premier élément d'entrée, et
où le deuxième écran d'enregistrement de carte comprend au moins l'un entre un nom d'une deuxième entreprise de cartes, un logotype d'une deuxième entreprise de cartes, une image liée à une deuxième entreprise de cartes, ou un deuxième élément d'entrée.

6. Dispositif électronique selon la revendication 1, où les instructions amènent le processeur à afficher la deuxième information reçue sur au moins une partie de l'unité d'affichage, où des symboles sont affichés au lieu de chiffres dans la deuxième information reçue.

7. Dispositif électronique selon la revendication 1, où les instructions amènent le processeur à afficher la deuxième information reçue sur au moins une partie de l'unité d'affichage, où :
si la première information reçue concerne la première entreprise de cartes, des symboles sont affichés au lieu des premiers chiffres dans la deuxième information reçue,
si la première information reçue concerne la deuxième entreprise de cartes, des symboles sont affichés au lieu des deuxièmes chiffres dans la deuxième information reçue, et
le numéro des premiers chiffres est différent du numéro des deuxièmes chiffres, ou une place des premiers chiffres est différente de la place des deuxièmes chiffres.

8. Dispositif électronique selon la revendication 1, où les instructions amènent le processeur à afficher un clavier de sécurité pour recevoir la deuxième information sur au moins une partie de l'unité d'affichage,
où :
si la première information reçue concerne la première entreprise de cartes, le clavier de sécurité a un premier arrangement de touches, et
si la première information reçue concerne la deuxième entreprise de cartes, le clavier de sécurité a un deuxième arrangement de touches.

9. Dispositif électronique selon la revendication 1, où la partie reçue du numéro de carte inclut un numéro d'identification bancaire, BIN, de la carte de paiement.

10. Dispositif électronique selon la revendication 1, où les instructions amènent le processeur à transmettre, au dispositif externe à travers le circuit de communication, la partie reçue du numéro de carte ainsi qu'au moins l'un entre : des informations d'utilisateur pour identifier un élément d'un service de paiement, ou
des informations d'identification du dispositif électronique.

11. Dispositif électronique selon la revendication 1, où les instructions amènent le processeur à recevoir des données de paiement correspondant à la carte de paiement d'un autre dispositif externe à travers le circuit de communication,
où les instructions amènent le processeur à stocker les données de paiement reçues dans la mémoire ou dans un module de sécurité, et
où le dispositif électronique comprend en outre au moins une antenne de bobine, où les instructions amènent le processeur à transmettre à un extérieur, utilisant l'au moins une antenne de bobine, un signal à base magnétique incluant les données de paiement reçues.

12. Dispositif électronique selon la revendication 1, comprenant en outre un microphone comme un dispositif d'entrée, où les instructions amènent le processeur à recevoir au moins l'une entre la première information ou la deuxième information à travers le microphone.

13. Dispositif électronique selon la revendication 1, comprenant en outre une caméra couplée de manière opérative au processeur,
où le processeur reçoit la partie du numéro de carte complet à travers la caméra au lieu du panneau tactile.

14. Dispositif électronique selon la revendication 1,
où le premier écran d'enregistrement de carte comprend la partie du numéro de carte complet, les emplacements d'entrée, concernant la première entreprise de cartes, pour recevoir la deuxième information, et des emplacements d'entrée, concernant la première entreprise de cartes, pour recevoir le reste du numéro de carte complet, et
où le deuxième écran d'enregistrement de carte comprend la partie du numéro complet de carte, les emplacements d'entrée, concernant la deuxième entreprise de cartes, pour recevoir la deuxième information, et des emplacements d'entrée, concernant la deuxième entreprise de cartes, pour recevoir le reste du numéro complet de carte.
